# EUROPEAN PATENT SPECIFICATION

(11) **EP 1 852 933 B1**
(45) Date of publication and mention of the grant of the patent: **13.10.2010**
(21) Application number: 06712798.5
(22) Date of filing: 01.02.2006
(51) Int. Cl.: H01M 10/36, H01M 4/02, H01M 4/38, H01M 4/48, H01M 4/58, H01M 10/38

(54) **THIN-FILM SOLID SECONDARY CELL**
DÜNNFILM-FESTKÖRPER-SEKUNDÄRZELLE
PILE SECONDAIRE SOLIDE A COUCHE MINCE

(30) Priority: 02.02.2005 JP 2005027014
(43) Date of publication of application: 07.11.2007
(73) Proprietor: Geomatec Co., Ltd., Yokohama-shi Kanagawa 2208109 (JP)
(72) Inventor: SANO, Kimihiro, Kannari, Kurihara-shi, Miyagi, 9895184 (JP); NAKAZAWA, Hiromi c/o Graduate School of Eng., Morioka-shi, Iwate 020-8551 (JP); BABA, Mamoru, Iwate, 0208550 (JP)
(74) Representative: Grünecker, Kinkeldey, Stockmair & Schwanhäusser Anwaltssozietät
(86) International application number: PCT/JP2006/301655
(87) International publication number: WO 2006/082846

(56) References cited:
- WO-A-97/19481
- JP-A- 08 162 151
- JP-A- 2001 273 928
- JP-A- 2003 217 574
- JP-A- 2004 146 297
- JP-A- 2005 209 434
- US-A- 5 597 660
- US-A1- 2004 258 984
- KIM HAN-KI ET AL: "Characteristics of rapid-thermal-annealed LiCoO2 cathode film for an all-solid-state thin film microbattery" JOURNAL OF VACUUM SCIENCE AND TECHNOLOGY A. VACUUM, SURFACES AND FILMS, AMERICAN INSTITUTE OF PHYSICS, NEW YORK, NY, US, vol. 22, no. 4, July 2004 (2004-07), pages 1182-1187, XP012073711 ISSN: 0734-2101

## Description

### TECHNICAL FIELD

The present invention relates to a thin-film solid secondary cell, and more particularly to a thin-film solid secondary cell which can be reduced in thickness and size.

### BACKGROUND ART

At the present day, a lithium-ion secondary cell is extensively used mainly in electronic devices, e.g., a portable device. That is because the lithium-ion secondary cell has a high voltage and high charge/discharge capacity but does not have a problem in a memory effect as compared with a nickel-cadmium cell and others.
Further, a further reduction in size/weight has been advanced in electronic devices and others, and development for a reduction in size/weight has also been promoted in the lithium-ion secondary cell as a battery which is mounted on the electronic devices and others. For example, a lithium-ion secondary cell which can be mounted in an IC card, a medical small device, and others and reduced in thickness/size has been developed. Furthermore, demanding a further reduction in thickness/size in the future can be expected.

In a conventional lithium-ion secondary cell, a metal piece or a metal foil is used for a positive electrode and a negative electrode, and these electrodes are immersed in an electrolytic solution and covered with a container to be used. Therefore, there is a limit in a reduction in thickness or size. In practice, a thickness of approximately 1 mm and a volume of approximately 1 cm³ are considered as a limit.
However, in recent years, a polymer cell using a gel electrolyte, not an electrolytic solution (see, e.g., Patent Document 1) or a thin-film solid secondary cell (see, e.g., Patent Documents 2 to 4) using a solid electrolyte has been developed to enable a further reduction in thickness and size.

The polymer cell disclosed in Patent Document 1 is constituted by sequentially arranging a positive electrode collector, a composite positive electrode containing a polymer solid electrolyte, an electrolyte layer composed of an ion-conducting polymer compound, a composite negative electrode containing a polymer solid electrolyte, and a negative electrode collector in an exterior body.
Such a polymer cell can be reduced in thickness and size as compared with a regular lithium-ion secondary cell using an electrolytic solution, but its thickness is limited to approximately 0.1 mm because it requires a gel electrolyte, a bond, an opening sealing member, and others, and hence it is not appropriate to advance a further reduction in thickness or size.

On the other hand, as disclosed in Patent Documents 2 to 4, the thin-film solid secondary cell is configured by sequentially laminating a collector thin film, a negative electrode active material thin film, a solid electrolyte thin film, a positive electrode active material thin film, and a collector thin film on a substrate or by laminating these layers on the substrate in reverse order.
With such a configuration, the thin-film solid secondary cell can be reduced in thickness to approximately 1 µm except the substrate. Moreover, when a thickness of the substrate is reduced or a solid electrolytic film having a reduced thickness is used in place of the substrate, a further reduction in thickness or size is possible as a whole.

Patent Document 2 discloses a thin-film solid secondary cell in which a lithium phosphate is used for a solid electrolyte layer and a vanadium oxide or a niobium oxide is used for a positive electrode layer and a negative electrode layer. Additionally, in the thin-film solid secondary cell according to Patent Document 2, lithium is injected into a negative electrode side. When lithium is injected into the negative electrode side in this manner, since a negative electrode layer must be once taken out into the atmosphere after the negative layer is formed and lithium must be injected into this layer by using a lithium injection device, the injection device is required and an injecting operation takes time, and hence there is a problem that a formation time and a formation cost are additionally required.

Further, the negative electrode layer made of, e.g., a vanadium oxide with lithium injected therein is apt to be oxidized, and weak in moisture. Therefore, degradation in properties of film, e.g., oxidation or moisture absorbent is often caused when injecting lithium, and there is a problem that the thin-film solid secondary cell with excellent cell characteristics cannot be stably formed.
Furthermore, there is also a problem that processing a vanadium oxide is troublesome in a manufacturing process or during use of a cell since this material has poisonous properties.

Moreover, Patent Document 3 discloses a thin-film solid secondary cell in which a lithium phosphate containing nitrogen is used for a solid electrolyte layer, a metal oxide containing lithium is used for a positive electrode layer, and a vanadium oxide is used for a negative electrode layer. In the thin-film solid secondary cell according to Patent Document 3, as different from the thin-film solid secondary cell according to Patent Document 2, since lithium is contained in a positive electrode material from the beginning, a lithium injecting operation is not required, a time and a cost required for this operation can be reduced, and the thin-film solid secondary cell with relatively good cell characteristics can be stably created.

However, when a vanadium oxide is used for the negative electrode layer, there is a problem that a voltage is rapidly reduced at the time of discharge and a capacity which can maintain a voltage equal to or above approximately 1 V required for driving a regular device is small as compared with a usual solution type secondary cell. Additionally, as explained above, there is a problem that the vanadium oxide is weak in moisture and processing this oxide is trouble since it has poisonous properties.

As explained above, the vanadium oxide used as the negative electrode material has a problem in processing and cell characteristics. However, when a lithium phosphate which is stable and has relatively high ion-conducting properties is used for the solid electrolyte layer, a reaction occurs on an interface between any other negative electrode material and the lithium phosphate and another product is formed, and hence a problem of degradation in cell characteristics occurs. Therefore, when the lithium phosphate is used for the solid electrolyte layer, the vanadium oxide is used as the negative electrode material.

On the other hand, Patent Document 4 discloses a thin-film solid secondary cell in which a lithium-ion conductor (a composite oxide composed of Li, Ta, Nb, N, or O having a high ion-conducting degree) other than the lithium phosphate is used for a solid electrolyte layer, a metal oxide (e.g., LiCoO₂ or LiMn₂O₄) containing lithium is used for a positive electrode layer, and a material (e.g., Si or Li₄Ti₅O₁₂) other than the vanadium oxide is used for a negative electrode layer.

Patent Document 1: Japanese Patent Application Laid-open No. 74496-1998 (pp. 3-6, FIGS. 1 and 2)
Patent Document 2: Japanese Patent Application Laid-open No. 284130-1998 (pp. 3-4, FIGS. 1 to 4)
Patent Document 3: Japanese Patent Application Laid-open No. 2002-42863 (pp. 9-16, FIGS. 1 to 16)
Patent Document 4: Japanese Patent Application Laid-open No. 2004-179158 (pp. 3-11, FIG. 1)

### DISCLOSURE OF INVENTION

### PROBLEM TO BE SOLVED BY THE INVENTION

According to the thin-film solid secondary cells disclosed in Patent Documents 2 and 3, a cell which is of a type requiring injection of lithium has a problem that a creation time and a cost are additionally required and stable cell characteristics are hard to be obtained. Furthermore, a cell which is of a type in which lithium is contained in an electrode material from the beginning has a problem that a voltage is reduced rapidly at the time of discharge. Moreover, when the vanadium oxide is used for a negative electrode, there is a problem that processing this material is troublesome since this material is weak in moisture and has poisonous properties. On the other hand, the thin-film solid secondary cell disclosed in Patent Document 4 does not have a problem of the lithium injecting operation or use of the vanadium oxide.

However, the thin-film solid secondary cells disclosed in Patent Document 2 to 4 have a problem that the film is apt to be exfoliated when a film thickness is increased to heighten a charge/discharge capacity. In particular, in the thin-film solid secondary cell disclosed in Patent Document 4, although an ion-conducting material other than a lithium phosphate is used for the solid electrolyte to obtain excellent cell characteristics, at least the positive electrode layer must be crystallized to acquire such excellent cell characteristics. Therefore, the film is apt to be exfoliated.

It is an object of the present invention to provide a thin-film solid secondary cell which can be readily processed, rarely provokes film exfoliation, and has excellent cell performance.

### MEANS FOR SOLVING PROBLEM

The present invention provides a thin-film solid secondary cell obtained by laminating a positive electrode collector layer, a positive electrode active material layer, a solid electrolyte layer, a negative electrode active material layer, and a negative electrode collector layer on a substrate, wherein the positive electrode active material layer is a thin film formed of a metal oxide containing a transition metal and lithium, the negative active material layer is a thin film formed of one of a semiconductor, a metal, an alloy, and a metal oxide other than a vanadium oxide, and the positive electrode active material layer, the solid electrolyte layer, and the negative electrode active material layer are amorphous thin films.

As explained above, in the present invention, of the positive electrode collector layer, the positive electrode active material layer, the solid electrolyte layer, the negative electrode active material layer, and the negative electrode collector layer formed on the substrate, the positive electrode active material layer is the thin-film composed of a metal oxide containing a transition metal and lithium, whilst the negative electrode active material layer is the thin-film composed of one of a semiconductor, a metal, an alloy, and a metal oxide, and hence lithium does not have to be injected on a later stage, and a cell having excellent cell characteristics can be stably created with reduced manufacturing time and steps. Further, since a vanadium oxide thin film is not included, processing is not troublesome. Furthermore, since the positive electrode active material layer, the solid electrolyte layer, and the negative electrode active material layer are amorphous, the film is hardly exfoliated, and stable cell characteristics can be maintained.

Moreover, it is suitable that a material forming the solid electrolyte layer is a lithium phosphate (Li₃PO₄) or a lithium phosphate having nitrogen added therein (LIPON).
Additionally, it is suitable that a material forming the positive electrode active material layer is one of a lithium-manganese oxide, a lithium-cobalt oxide, a lithium-nickel oxide, a lithium-manganese-cobalt oxide, and a lithium-titanium oxide.

Further, a material Forming the negative electrode active material layer is one of a lithium-titanium oxide (e.g., Li₄Ti₅O₁₂ or LiTi₂O₄) , a niobium pentoxide (Nb₂O₅), a silicon-manganese alloy (Si-Mn), a silicon-cobalt alloy (Si-Co), a silicon-nickel alloy (Si-Ni), a nickel oxide (NiO), a nickel oxide having lithium added therein (NiO-Li), an indium oxide (In₂O₃), an indium oxide having tin added therein (ITO), a tin oxide (SnO₂), a tin oxide having antimony added therein (ATO), a tin oxide having fluorine added therein (FTO), a zinc oxide (ZnO), a zinc oxide having aluminum added therein (AZO), a zinc oxide having gallium added therein (GZO), a titanium oxide (TiO₂), a silicon semiconductor (Si), a germanium semiconductor (Ge), a lithium metal (Li), a magnesium metal (Mg), a magnesium-lithium alloy (Mg-Li), an aluminum metal (Al), and an aluminum-lithium alloy (A1-Li).

Further, it was found that, if a difference in electrode potential between the negative electrode active material layer and the positive electrode active material layer is 1 V or above, a potential difference of 1 V or above is naturally produced between both the electrodes without charge from the outside when the thin-film solid secondary film is discharged to nearly 0 V and then a period of time passes. As a result, the potential difference on a practical level is naturally produced, and hence an electric device can be semi-permanently driven.

Furthermore, it is suitable that an anti-moisture film is laminated on the surface. When the anti-moisture film is formed on the surface in this manner, the cell performance can be maintained for a long time.
Moreover, it is suitable that the positive electrode collector layer, the positive electrode active material layer, the solid electrolyte layer, the negative electrode active material layer, and the negative electrode collector layer are formed by a sputtering method.

### EFFECT OF THE INVENTION

According to the present invention, since at least the layers (the positive electrode active material layer, the solid electrolyte layer, and the negative electrode active material layer) other than the collector layers in the constituent thin films are amorphous, a stress is small, and film exfoliation hardly occurs even if the entire film thickness is increased to heighten the charge/discharge capacity. Additionally, since a material containing lithium is used for the positive electrode active material layer, lithium does not have to be injected on a later stage, and the thin-film solid secondary cell having excellent cell characteristics can be stably created with reduced manufacturing time and steps. Further, the cell characteristics, e.g., an increase in the charge/discharge capacity, stabilization of cycle characteristics, or a reduction in a speed of a voltage drop can be improved by specifying materials used for the positive electrode active material layer and the negative electrode active material layer. Furthermore, since a vanadium oxide is not used for the negative electrode active material layer, an influence of moisture is not given, and poisonous properties do not become a problem, and processing can be facilitated.

### BRIEF DESCRIPTION OF DRAWINGS

FIG. 1 is a cross-sectional view of a thin-film solid secondary cell according to an embodiment of the present invention;
FIG. 2 is a graph of charge/discharge characteristics of a thin-film solid secondary cell according to Example 1;
FIG. 3 is a graph of charge/discharge characteristics of a thin-film solid secondary cell according to Example 2;
FIG. 4 is a graph of charge/discharge characteristics of a thin-film solid secondary cell according to Example 3; and
FIG. 5 is a graph of charge/discharge characteristics of a thin-film solid secondary cell according to Comparative Example 1.

### BEST MODE(S) FOR CARRYING OUT THE INVENTION

An embodiment according to the present invention will now be explained hereinafter with reference to the accompanying drawings. It is to be noted that materials, arrangements, structures, and others explained below do not restrict the present invention, and various modifications can be carried out within the scope of the present invention.

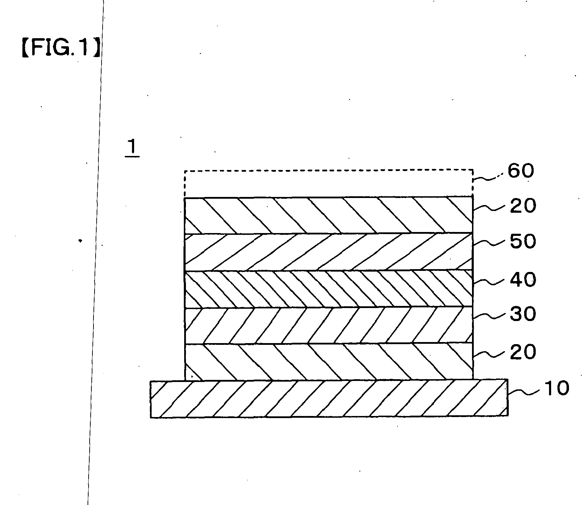

As shown in FIG. 1, a lithium-ion thin-film solid secondary cell 1 according to this embodiment is formed by sequentially laminating a positive-electrode-side collector layer 20, a positive electrode active material layer 30, a solid electrolyte layer 40, a negative electrode active material layer 50, a negative-electrode-side collector layer 20, and an anti-moisture film 60 on a substrate 10. It is to be noted that, as the lamination order on the substrate 10, the negative-electrode-side collector layer 20, the negative electrode active material layer 50, the solid electrolyte layer 40, the positive electrode active material layer 30, the positive-electrode-side collector layer 20, and the anti-moisture film 60 may be laminated on this order.

As the substrate 10, glass, semiconductor silicon, ceramics, stainless, or a resin substrate can be used. As the resin substrate, for example, polyimide or PET can be used. Further, a bendable thin film can be used for the substrate 10 if it can be processed without collapse of its shape.

As the collector layer 20, an electroconductive film having excellent adhesion for a positive electrode (the positive electrode active material layer 30) and a negative electrode (the negative electrode active material layer 50) and a low electric resistance can be used. It is preferable for a sheet resistance of the collector layer 20 to be equal to or below 1 kΩ/□ for the collector layer 20 to function as a fetch electrode. When a film thickness of the collector layer 20 is set to approximately 0.1 µm or above, the collector layer 20 must be formed of a material whose resistivity is equal to or below approximately 1×10 ²Ω·cm. As such a material, for example, vanadium, aluminum, copper, nickel, or gold can be used. Using such a material enables forming the collector layer 20 with a very small film thickness of approximately 0.05 to 1 µm which can reduce an electric resistivity.

As the positive electrode active material layer 30, a metal oxide thin film containing lithium and at least one or more of manganese, cobalt, and nickel which are transition metals enabling desorption and adsorption of a lithium ion can be used. For example, a lithium-manganese oxide (e.g., LiMn₂O₄, Li₂Mn₂O₄), a lithium-cobalt oxide (e.g., LiCoO₂, LiCo₂O₄), a lithium-nickel oxide (e.g., LiNiO₂, LiNi₂O₄), a lithium-manganese-cobalt oxide (e.g., LiMnCoO₄, Li₂MnCoO₄), or a lithium-titanium oxide (e.g., Li₄Ti₅O₁₂, LiTi₂O₄) can be used. Although a film thickness of the positive electrode active material layer 30 which is as small as possible is desirable, setting this film thickness to approximately 0.05 to 5 µm which enables assuring a charge/discharge capacity can suffice.

As the solid electrolyte layer 40, a lithium phosphate (Li₃PO₄) or a lithium phosphate having nitrogen added therein (LiPON) having excellent lithium ion-conducting properties can be used. As a film thickness of the solid electrolyte layer 40, a very thin thickness of approximately 0.05 to 1 µm in which occurrence of pin holes is reduced is preferable.

As the negative electrode active material layer 50, a semiconductor, a metal, a metal alloy, or a metal oxide other than a vanadium oxide can be used. As the semiconductor, for example, silicon (Si) or germanium (Ge) can be used. As the metal or the metal alloy, for example, a lithium metal (Li), a magnesium metal (Mg), an aluminum metal (Al), a silicon-manganese alloy (Si-Mn), a silicon-cobalt alloy (Si-Co), a silicon-nickel alloy (Si-Ni), a magnesium-lithium alloy (Mg-Li), or an aluminum-lithium alloy (Al-Li) can be used.
As the metal oxide, for example, a lithium-titanium oxide (e.g., LiTi₂O₄, Li₄Ti₅O₁₂), a niobium pentoxide (Nb₂O₅), a nickel oxide (NiO), a nickel oxide having lithium added therein (NiO-Li), an indium oxide (In₂O₃), an indium oxide having tin added therein (ITO), a tin oxide (SnO₂), a tin oxide having antimony added therein (ATO), a tin oxide having fluorine added therein (FTO), a zinc oxide (ZnO), a zinc oxide having aluminum added therein (AZO), a zinc oxide having gallium added therein(GZO), or a titanium oxide (TiO₂) can be used.
Although a thickness film of the negative electrode active material layer 50 which is as small as possible is desirable, setting this film thickness to approximately 0.05 to 5 µm which enables assuring a charge/discharge capacity can suffice.

Further, a surface of the thin-film solid secondary cell 1 exposed to atmospheric air is covered with the anti-moisture film 60 having an anti-moisture effect. Adopting this structure enables maintaining cell performance as long as possible. As the anti-moisture film 60, a silicon oxide (SiO₂) or a silicon nitride (SiNₓ) can be used. A film thickness of the anti-moisture film 60 is reduced as much as possible, and approximately 0.05 to 1 µm having the high anti-moisture effect is preferable.

As a method of forming each of the thin films, for example, a vacuum film forming method such as a sputtering method, an electron beam evaporation method or a heating evaporation method, or a coating method can be used. Preferably, it is good to use the vacuum film forming method which can uniformly form a thinner film. More preferably, it is good to use the sputtering method which can uniformly form a film with a reduced shift of an evaporation material and an atomic composition.
Furthermore, in this example, in order to avoid crystallization of at least the layers other than the collector layer 20 at the time of film formation, the films of all the constituent layers are formed without being heated, and a temperature of the substrate at the end of film formation is maintained at 150°C or below. As explained above, in the thin-film solid secondary cell 1 according to this example, at least the layers other than the collector layer 20 are formed into amorphous layers, and hence an internal stress is reduced, and film exfoliation hardly occurs.

In the thin-film solid secondary cell 1, when charging is carried out, lithium is desorbed as an ion from the positive electrode active material layer 30, and it is adsorbed by the negative electrode active material layer 50 through the solid electrolyte layer 40. At this time, electrons are discharged to the outside from the positive electrode active material layer 30.
Moreover, at the time of discharge, lithium is desorbed as an ion from the negative electrode active material layer 50, and it is adsorbed by the positive electrode active material layer 30 through the solid electrolyte layer 40. At this time, electrons are discharged to the outside from the negative electrode active material layer 50.

Additionally, in the thin-film solid secondary cell 1 according to this example, materials used for the respective layers are selected in such a manner that a difference in electrode potential between the positive electrode active material layer 30 and the negative electrode active material layer 50 becomes approximately 1 V or above.
Here, when materials used for the positive electrode active material layer 30 and the negative electrode active material layer 50 were selected to create the thin-film solid secondary cell 1 in such a manner that a difference in electrode potential becomes large and this thin-film solid secondary cell 1 was used to repeatedly perform charge and discharge, an inventor of this application found that, in the thin-film solid secondary cell 1 according to this example, a potential difference between both the electrodes becomes approximately 0 when discharge is performed and then the potential difference of 1 V or above naturally occurs between both the electrodes after both the electrodes are left for a while. That is, it can be considered that a force of returning to an electrically equilibrium state acts on the thin-film solid secondary cell 1 when the electrodes are left after discharge, a lithium ion naturally moves from the positive electrode side to the negative electrode side, and a voltage is naturally increased.

Examples and comparative examples according to the present invention will now be explained with reference to the accompanying drawings. Table 1 and FIGS. 1 to 5 show structures and measurement results of charge/discharge characteristics of Examples 1 to 10 and Comparative Example 1.

(Example 1) In Example 1, a collector layer 20, a positive electrode active material layer 30, a solid electrolyte layer 40, a negative electrode active material layer 50, and the collector layer 20 were formed on a substrate 10 in this order by a sputtering method to provide a structure depicted in FIG. 1, thereby creating a thin-film solid secondary cell.
Soda lime glass having a vertical dimension of 100 mm, a lateral dimension of 100 mm, and a thickness of 1 mm was used for the substrate 10.
The collector layer 20 was formed by a DC magnetron sputtering method using a vanadium metal target. A DC power was 1 KW, and the film was formed without heating. As a result, a vanadium thin film of 0.3 µm was formed as the collector layer 20.

The positive electrode active material layer 30 was formed by an RF magnetron sputtering method using a sintered body target of a lithium manganate (LiMn₂O₄) and introducing oxygen. An RF power was 1 KW, and the film was formed without heating. As a result, a lithium manganate thin film of 1 µm was formed.
The solid electrolyte layer 40 was formed by an RF magnetron sputtering method using a sintered body target of lithium phosphate (Li₃PO₄) and introducing a nitrogen gas. An RF power was 1 KW, and the film was formed without heating. As a result, a lithium phosphate thin film of 1 µm having nitrogen added therein was formed.

The negative electrode active material layer 50 was formed by an RF magnetron sputtering method using a sintered body target of a lithium-titanium oxide (Li₄Ti₅O₁₂) and introducing oxygen. An RF power was 1 KW, and the film was formed without heating. As a result, an Li₄Ti₅O₁₂ thin film of 0.3 µm was formed.

The thus obtained thin-film solid secondary cell was subjected to X-ray diffraction measurement, and the fact that a diffraction peak does not appear was consequently confirmed. As a result, it was confirmed that all the constituent layers are amorphous.

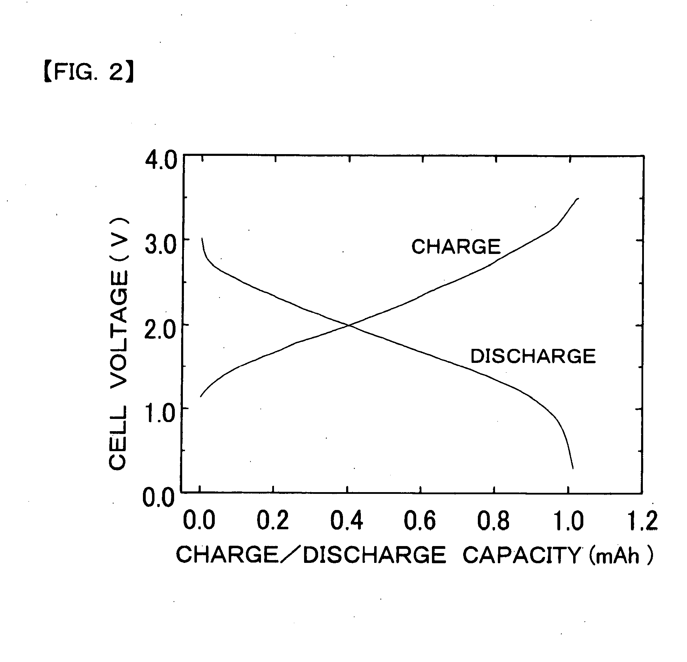

Then, in order to evaluate the cell performance, a charge/discharge measurement instrument was used to measure charge/discharge characteristics.
As measurement conditions, currents at the time of both charge and discharge were 0.4 mA, and voltages aborting charge and discharge were 3.5 V and 0.3 V, respectively.
As a result, it was confirmed that a charge/discharge operation is repeatedly demonstrated. FIG. 2 shows a graph of charge/discharge characteristics in a 10th cycle demonstrating a stable charge/discharge operation. A discharge start voltage and a charge start voltage in the 10th cycle where the charge/discharge operation is stable were respectively 3.0 V and 1.1 V, and a charge capacity and a discharge capacity were respectively 1.03 mAh and 1.01 mAh. Further, a discharge capacity which enables maintaining a voltage of 1 V or above required for driving a regular device was approximately 0.94 mAh.
Furthermore, in this example, the charge/discharge measurement was carried out up to 100 cycles, and the fact that substantially fixed charge/discharge curves are stably shown was confirmed.

Moreover, the thin-film solid secondary cell was charged to 2.5 V, and then a driving continuation time of a digital clock was confirmed. As a result, it was confirmed that the digital clock can be continuously driven for about one month. Table 1 shows results of the charge/discharge characteristics.

**[Table 1]**

| 10th cycle | | | | | | | |
|---|---|---|---|---|---|---|---|
| | Positive electrode | Negative electrode | Discharge start voltage (V) | Charge start voltage (V) | Charge capacity (mAh) | Discharge capacity (mAh) | Discharge capacity (1 V or above) (mAh) |
| Example 1 | LiMn₂O₄ | Li₄Ti₅O₁₂ | 3.0 | 1.1 | 1.03 | 1.01 | 0.94 |
| Example 2 | LiMn₂O₄ | Si-Mn | 3.4 | 2.3 | 1.00 | 0.98 | 0.97 |
| Example 3 | LiMn₂O₄ | ITO | 3.1 | 2.1 | 1.11 | 1.03 | 0.96 |
| Example 4 | LiMn₂O₄ | Nb₂O₅ | 3.0 | 0.7 | 1.22 | 1.18 | 1.05 |
| | | NiO | 3.1 | 0.8 | 1.10 | 1.06 | 0.98 |
| | | NiO-Li | 3.2 | 0.9 | 1.18 | 1.09 | 1.00 |
| | | LiTi₂O₄ | 2.7 | 0.5 | 1.01 | 0.98 | 0.91 |
| | | In₂O₃ | 3.3 | 2.0 | 1.14 | 1.08 | 1.01 |
| | | SnO₂ | 3_{·}3 | 1.9 | 1.08 | 1.02 | 0.95 |
| | | ATO | 3.4 | 2.0 | 1.12 | 1.05 | 1.00 |
| | | FTO | 3.4 | 2.1 | 1.10 | 1.06 | 1.03 |
| | | Si-Co | 3.4 | 2.5 | 1.20 | 1.15 | 1.08 |
| | | Si-Ni | 3.3 | 2.1 | 1.18 | 1.10 | 1.05 |
| Example 5 | LiMn₂O₄ | ZnO | 3.0 | 0.8 | 0.75 | 0.70 | 0.65 |
| | | AZO | 3.2 | 0.9 | 0.76 | 0.73 | 0.66 |
| | | GZO | 3.1 | 0.7 | 0.80 | 0.77 | 0.70 |
| | | TiO₂ | 3.1 | 0.8 | 0.71 | 0.67 | 0.61 |
| | | Si | 3.4 | 2.6 | 0.68 | 0.61 | 0.59 |
| | | Ge | 3.4 | 2.7 | 0.61 | 0.59 | 0.55 |
| Example 6 | LiMn₂O₄ | Li | 4.3 | 3.5 | 1.94 | 1.93 | 1.91 |
| | | Mg | 3.8 | 2.9 | 1.31 | 1.28 | 1.27 |
| | | Mg-Li | 4.0 | 3.0 | 1.38 | 1.35 | 1.34 |
| | | Al | 3.5 | 2.7 | 1.26 | 1.23 | 1.21 |
| | | Al-Li | 3.7 | 2.8 | 1.29 | 1.28 | 1.27 |
| Example 7 | LiCoO₂ | Li₄Ti₅O₁₂ | 3.3 | 1.5 | 1.16 | 1.08 | 1.03 |
| | LiNiO₂ | | 2.9 | 0.8 | 0.98 | 0.89 | 0.84 |
| | Li₂Mn₂O₄ | | 3.0 | 0.9 | 1.45 | 1.31 | 1.26 |
| | LiMnCoO₄ | | 3.2 | 1.4 | 1.56 | 1.48 | 1.42 |
| | Li₂MnCoO₄ | | 3.2 | 1.3 | 1.59 | 1.53 | 1.45 |
| | LiTi₂O₄ | | 2.6 | 0.5 | 0.88 | 0.82 | 0.80 |
| Example 8 | LiCoO₂ | Nb₂O₅ | 3.2 | 1.4 | 1.19 | 1.11 | 1.04 |
| | LiNiO₂ | | 3.0 | 0.7 | 1.01 | 0.90 | 0.82 |
| | Li₂Mn₂O₄ | | 2.9 | 0.8 | 1.37 | 1.35 | 1.26 |
| | LiMnCoO₄ | | 3.2 | 1.2 | 1.59 | 1.52 | 1.42 |
| | Li₂MnCoO₄ | | 3.1 | 1.2 | 1.60 | 1.56 | 1.47 |
| | LiTi₂O₄ | | 2.5 | 0.4 | 0.92 | 0.85 | 0.81 |
| Example 9 | LiCoO2 | Si-Mn | 3.4 | 2.5 | 1.14 | 1.11 | 1.09 |
| | LiNiO₂ | | 3.2 | 2.1 | 0.91 | 0.85 | 0.83 |
| | Li₂Mn₂O₄ | | 3.3 | 2.2 | 1.31 | 1.29 | 1.26 |
| | LiMnCoO₄ | | 3.4 | 2.3 | 1.41 | 1.39 | 1.35 |
| | Li₂MnCoO₄ | | 3.4 | 2.2 | 1.45 | 1.41 | 1.36 |
| | LiTi₂O₄ | | 2.8 | 0.9 | 0.90 | 0.87 | 0.85 |
| Example 10 | LiCoO₂ | NiO | 3.2 | 1.4 | 1.13 | 1.07 | 1.01 |
| | LiNiO₂ | | 3.0 | 0.7 | 0.88 | 0.78 | 0.72 |
| | Li₂Mn₂O₄ | | 2.9 | 0.9 | 1.36 | 1.28 | 1.20 |
| | LiMnCoO₄ | | 3.2 | 1.3 | 1.45 | 1.38 | 1.31 |
| | Li₂MnCoO₄ | | 3.2 | 1.1 | 1.48 | 1.41 | 1.35 |
| | LiTi₂O₄ | | 2.5 | 0.5 | 0.85 | 0.81 | 0.75 |
| Comparative Example 1 | LiMn₂O₄ | V₂O₅ | 2.7 | 0.5 | 0.89 | 0.89 | 0.28 |

(Example 2) In Example 2, a thin-film solid secondary cell having the structure depicted in FIG. 1 was created by a sputtering method. Layers other than a negative electrode active material layer 50 were formed with the same materials, the same film thicknesses, and the same film forming conditions as those in Example 1. The negative electrode active material layer 50 was formed by a DC magnetron sputtering method using an Si-Mn alloy target (Si:Mn=70:30 at%). A DC power was 1 KW, and the film was formed without heating. As a result, an Si-Mn alloy thin film of 0.3 µm was formed as the negative electrode active material layer 20.

In the following examples and comparative example, the same X-ray diffraction measurement as that in Example 1 was carried out, and the charge/discharge characteristics were measured under the same measurement conditions unless stated.
A diffraction peak did not appear in the X-ray diffraction measurement, and it was confirmed that all the constituent layers in the thin-film solid secondary cell are amorphous.

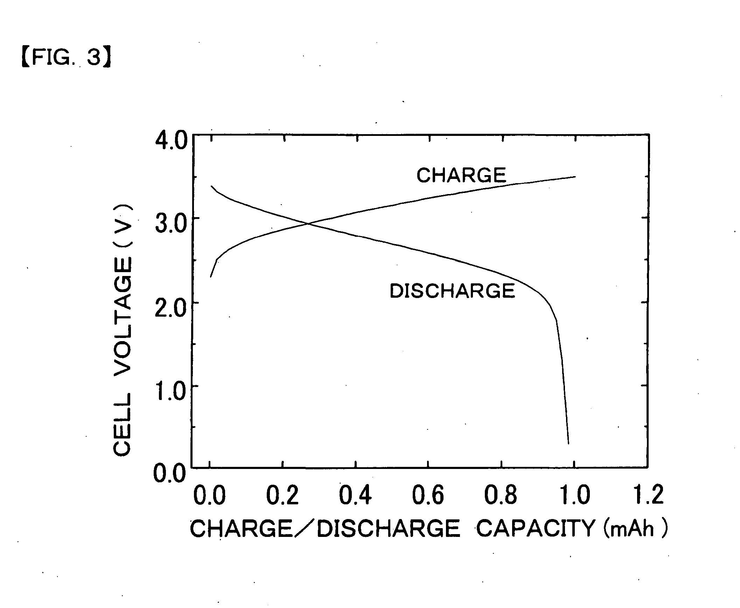

In the measurement of the charge/discharge characteristics, it was confirmed that the thin-film solid secondary cell repeatedly demonstrates a charge/discharge operation. FIG. 3 shows a graph of charge/discharge characteristics in a 10th cycle stably demonstrating the charge-discharge operation. A discharge start voltage and a charge start voltage in the 10th cycle in which the charge/discharge operation is stable were respectively 3.4 V and 2.3 V, and a charge capacity and a discharge capacity were respectively 1.00 mAh and 0.98 mAh. Additionally, a discharge capacity which enables maintaining a voltage of 1 V or above required to drive a regular device was approximately 0.97 mAh.
Further, the charge/discharge measurement was carried out up to 100 cycles, and the fact that substantially fixed charge/discharge curves are stably shown in the thin-film solid secondary cell was confirmed.
Furthermore, the thin-film solid secondary cell charged to 2.5 V was able to continuously drive a digital clock for about one month.

Moreover, although discharge was performed to 0.3 V in the charge/discharge measurement, charge was started from 2.3 V as shown in FIG. 3. This means that a voltage is naturally increased to 2.3 V to perform charge after end of discharge. When the digital clock which can be driven with a voltage of 1 V or above was driven by the thin-film solid secondary cell naturally charged to 2.3 V, the digital clock was continuously driven for about 10 days. Additionally, a voltage measured at a time point where driving is impossible was 0.9 V, but the voltage again measured after 10 minutes was 2.3 V as a result of recovery. The digital clock can be driven by this thin-film solid secondary cell having a naturally increased voltage, and the same cycle (natural charge and digital clock driving) was continuously confirmed for 100 times. At this time, the voltage was naturally increased to approximately 2 V.
Further, the thin-film solid secondary cell immediately after creation which is not subjected to charge/discharge measurement has a voltage of 2.4 V from the beginning, and can drive the digital clock.

Furthermore, the thin-film solid secondary cell according to Example 1 was likewise subjected to the experiment of driving the digital clock. In the thin-film solid secondary cell according to Example 1, a voltage which is naturally increased after discharge was approximately 1.1 V as shown in FIG. 2. In the thin-film solid secondary cell according to Example 1, a voltage was naturally increased after discharge, and then the same digital clock was able to be driven for about one hour. Moreover, when a voltage of the thin-film solid secondary cell was measured after the cell was left for a while, the voltage was increased to approximately 1.1 V. The thin-film solid secondary cell having the voltage increased to approximately 1.1 V was again able to drive the digital clock for about one hour. This cycle was able to be continuously repeated for 100 times.

(Example 3) In Example 3, a thin-film solid secondary cell having the structure depicted in FIG. 1 was created by a sputtering method. Layers other than a negative electrode active material layer 50 were formed with the same materials, the same film thicknesses, and the same film forming conditions as those in Example 1. The negative electrode active material layer 50 was formed by an RF magnetron sputtering method using a sintered body target of an indium oxide having tin added therein (ITO) and introducing oxygen. An RF power was 1 KW, and the film was formed without heating. As a result, an ITO thin film of 0.3 µm was formed.
A diffraction peak did not appear in the X-ray diffraction measurement, and it was confirmed that all the constituent layers in the thin-film solid secondary cell are amorphous.

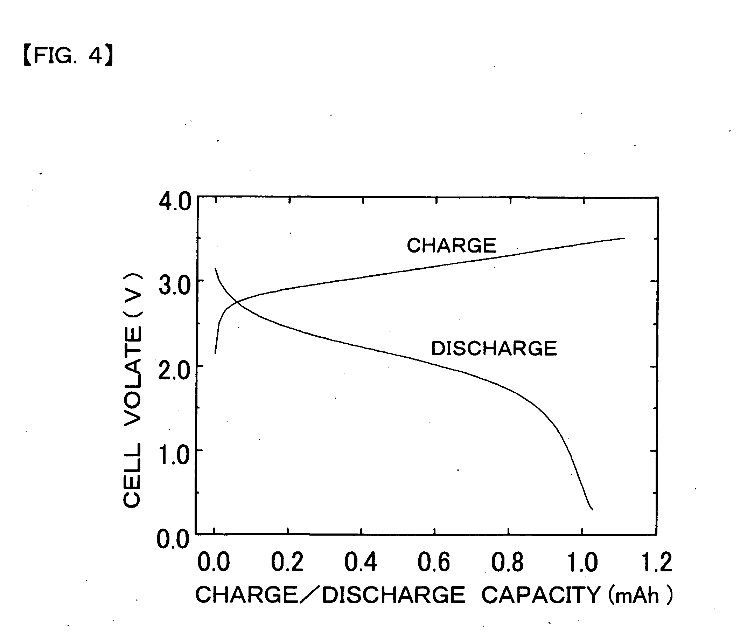

In the measurement of the charge/discharge characteristics, it was confirmed that the thin-film solid secondary cell repeatedly demonstrates a charge/discharge operation. FIG. 4 shows a graph of charge/discharge characteristics in a 10th cycle stably demonstrating the charge-discharge operation. A discharge start voltage and a charge start voltage in the 10th cycle in which the charge/discharge operation is stable were respectively 3.1 V and 2.1V, and a charge capacity and a discharge capacity were respectively 1.11 mAh and 1.03 mAh. Additionally, a discharge capacity which enables maintaining a voltage of 1 V or above required to drive a regular device was approximately 0.96 mAh.
Further, the charge/discharge measurement was carried out up to 100 cycles, and the fact that substantially fixed charge/discharge curves are stably shown by the thin-film solid secondary cell was confirmed.
Furthermore, the thin-film solid secondary cell charged to 2.5 V was able to continuously drive a digital clock for about one month.

Moreover, although discharge was performed to 0.3 V in the charge/discharge measurement, charge was started from 2.1 V as shown in FIG. 4. This means that a voltage is naturally increased to 2.1 V to perform charge after end of discharge. When the digital clock which can be driven with a voltage of 1 V or above was driven by the thin-film solid secondary cell naturally charged to 2.1 V, the digital clock was continuously driven for about 8 days. Additionally, a voltage measured at a time point where driving is impossible was 0.9 V, but the voltage again measured after 10 minutes was 2.1 V as a result of recovery. The digital clock can be driven by this thin-film solid secondary cell having a naturally increased voltage, and the same cycle (natural charge and digital clock driving) was continuously confirmed for 100 times. At this time, the voltage was naturally increased to approximately 2 V.
Further, the thin-film solid secondary cell immediately after creation which is not subjected to charge/discharge measurement has a voltage of 2.0 V from the beginning, and can drive the digital clock.

(Example 4) In Example 4, a thin-film solid secondary cell having the structure depicted in FIG. 1 was created by a sputtering method. Layers other than a negative electrode active material layer 50 were formed with the same materials, the same film thicknesses, and the same film forming conditions as those in Example 1. As materials which are used to form the negative electrode active material layer 50, there are 10 types, i.e., a niobium pentoxide (Nb₂O₅), a nickel oxide (NiO), a nickel oxide having lithium added therein (NiO-Li, NiO:Li=90:10 at%), a lithium titanate (LiTi₂O₄), an indium oxide (In₂O₃), a tin oxide (SnO₂), a tin oxide having antimony added therein (ATO), a tin oxide having fluorine added therein (FTO), a silicon-cobalt alloy (Si-Co, Si:Co=70:30 at%), and a silicon-nickel alloy (Si-Ni, Si:Ni=70:30 at%).
A diffraction peak did not appear in the X-ray diffraction measurement, and it was confirmed that all the constituent layers in the 10 types of thin-film solid secondary cells are amorphous.

As a result of measuring charge/discharge characteristics, in each of the thin-film solid secondary cells using Nb₂O₅, NiO, NiO-Li, and LiTi₂O₄ for the negative electrode, a charge/discharge curve was substantially the same as that of the thin-film solid secondary cell according to Example 1 depicted in FIG. 2. In each of the thin-film solid secondary cells using In₂O₃, SnO₂, ATO, and FTO for the negative electrode, the charge/discharge curve was substantially the same as that of the thin-film solid secondary cell according to Example 3 depicted in FIG. 4. Moreover, in each of the thin-film solid secondary cells using Si-Co and Si-Ni for the negative electrode, the charge/discharge curve was substantially the same as that of the thin-film solid secondary cell according to Example 2 depicted in FIG. 3.
Additionally, although there were differences in charge start voltage between the respective thin-film solid secondary cells, it was confirmed that discharge start voltages, charge capacities, discharge capacities, and discharge capacities which enable maintaining a voltage of 1 V or above have values substantially equivalent to those in Example 1 and others.

Further, the 10 types of thin-film solid secondary cells charged to 2.5 V were able to continuously drive a digital clock for about one month.
Furthermore, it was confirmed that each of the six types of thin-film solid secondary cells using In₂O₃, SnO₂, ATO, FTO, Si-Co, and Si-Ni for the negative electrode in the 10 types of thin-film solid secondary cells has the charge start voltage which is as high as 1.9 V or above as shown in Table 1, can be naturally charged, and can continuously repeat the cycle (natural charge and digital clock driving) for 100 times like Examples 1 to 3. Moreover, each of these six types of thin-film solid secondary cells which is not subjected to charge/discharge measurement has a voltage of 1.5 V or above even immediately after creation and can drive the digital clock like Examples 1 to 3.

(Example 5) In Example 5, a thin-film solid secondary cell having the structure depicted in FIG. 1 was created by a sputtering method. Layers other than a negative electrode active material layer 50 were formed with the same materials, the same film thicknesses, and the same film forming conditions as those in Example 1. As materials which are used to form the negative electrode active material layer 50, there are six types, i.e., a zinc oxide (ZnO), a zinc oxide having aluminum added therein (AZO), a zinc oxide having gallium added therein (GZO), a titanium oxide (TiO₂), silicon (Si), and germanium (Ge).
A diffraction peak did not appear in the X-ray diffraction measurement, and it was confirmed that all the constituent layers in the six types of thin-film solid secondary cells are amorphous.

As a result of measuring charge/discharge characteristics, in each of the thin-film solid secondary cells using ZnO, AZO, GZO, and TiO₂ for the negative electrode, a charge/discharge curve was substantially the same as that of the thin-film solid secondary cell according to Example 1 depicted in FIG. 2. In each of the thin-film solid secondary cells using Si and Ge for the negative electrode, the charge/discharge curve was substantially the same as that of the thin-film solid secondary cell according to Example 2 depicted in FIG. 3.
Additionally, although discharge start voltages of the respective thin-film solid secondary cells were substantially equal to each other, slight differences were observed in charge start voltages, and charge capacities, discharge capacities, and discharge capacities which enable maintaining a voltage of 1 V or above are approximately 50 to 80% of those in Example 1 and they have relatively low values.

Further, the six types of thin-film solid secondary cells charged to 2.5 V were able to continuously drive a digital clock for about 20 days.
Furthermore, it was confirmed that each of the two types of thin-film solid secondary cells using Si and Ge for the negative electrode in the six types of thin-film solid secondary cells has the charge start voltage of 2.6 V or above as shown in Table 1, can be naturally charged, and can continuously repeat the cycle (natural charge and digital clock driving) for 100 times like Examples 1 to 3. Moreover, each of these two types of thin-film solid secondary cells which is not subjected to charge/discharge measurement has a voltage of 2.0 V or above even immediately after creation and can drive the digital clock like Examples 1 to 3.

(Example 6) In Example 6, a thin-film solid secondary cell having the structure depicted in FIG. 1 was created by a sputtering methods. Layers other than a negative electrode active material layer 50 were formed with the same materials, the same film thicknesses, and the same film forming conditions as those in Example 1. As materials which are used to form the negative electrode active material layer 50, there are five types, i.e., lithium (Li), magnesium (Mg), a magnesium-lithium alloy (Mg-Li, Mg:Li=95:5 at%), aluminum (Al), and an aluminum-lithium alloy (Al-Li, Al:Li=95:5 at%).

Each of the negative electrode active material layers 50 using the materials other than Li was formed into a thin film of 0.3 µm by a DC sputtering method using a power 1 kW without heating. Since production of a target for sputtering is difficult in case of Li, the negative electrode active material layer 50 using Li was formed into a thin film of 0.3 µm by an EB evaporation method using granular Li.
A diffraction peak did not appear in the X-ray diffraction measurement, and it was confirmed that all the constituent layers in the six types of thin-film solid secondary cells are amorphous.

In measurement of charge/discharge characteristics, since a charge start voltage of each of all the cells was close to 3 V, voltages aborting charge and discharge were respectively increased to 4.5 V and 1.5 V to carry out the measurement. A measurement current was 0.4 mA which is the same as those in Examples 1 to 5.
As a result, it was confirmed that, in each of all the thin-film solid secondary cells, a charge/discharge curve has a shape obtained by upwardly shifting the charge/discharge curve according to Example 2 depicted in FIG. 3 by approximately 1 V. Additionally, discharge start voltages, charge start voltages, charge capacities, discharge capacities, and discharge capacities which enable maintaining a voltage of 1 V or above have values larger than those in Examples 1 to 5.

Further, when the five types of thin-film solid secondary cells according to this example were charged to 3.5 V to then drive a digital clock, it was confirmed that these thin-film solid secondary cells can continuously drive the digital clock for about one month or more.
Furthermore, it was confirmed that each of the thin-film solid secondary cells according to this example has the charge start voltage of 2.7 V or above as shown in Table 1, can be naturally charged, and can continuously repeat the cycle (natural charge and digital clock driving) for 100 times like Examples 1 to 3. Moreover, each of these thin-film solid secondary cells according to this example which is not subjected to charge/discharge measurement has a voltage of 2.5 V or above even immediately after creation and can drive the digital clock like Examples 1 to 3.

(Example 7) In Example 7, a thin-film solid secondary cell having the structure depicted in FIG. 1 was created by a sputtering method. Layers other than a positive electrode active material layer 30 were formed with the same materials, the same film thicknesses, and the same film forming conditions as those in Example 1. As materials which are used to form the positive electrode active material layer 30, there are six types, i.e., a lithium-cobalt oxide (LiCoO₂), a lithium-nickel oxide (LiNiO₂), a lithium-manganese oxide (Li₂Mn₂O₄), a lithium-manganese-cobalt oxide (LiMnCoO₄, Li₂MnCoO₄), and a lithium-titanium oxide (LiTi₂O₄).
A diffraction peak did not appear in the X-ray diffraction measurement, and it was confirmed that all the constituent layers in the 6 types of thin-film solid secondary cells are amorphous.

As a result of measuring charge/discharge characteristics, in each of all the thin-film solid secondary cells, a charge/discharge curve was substantially the same as that of the thin-film solid secondary cell according to Example 1 depicted in FIG. 2. In each of the four types of thin-film solid secondary cells using LiCoO₂, Li₂Mn₂O₄, LiMnCoO₄, and Li₂MnCoO₄ for the positive electrode, a charge capacity, discharge capacity, and discharge capacity which enables maintaining a voltage of 1 V or above had values larger than those in Example 1.
In each of the three types of thin-film solid secondary cells containing Co for the positive electrode (LiCoO₂, LiMnCoO₄, and Li₂MnCoO₄ are used for the positive electrode) in these thin-film solid secondary cells, an increase in a discharge start voltage and a charge start voltage was observed. In each of the two types of thin-film solid secondary cells using LiNiO₂ and LiTi₂O₄ for the positive electrode, a discharge start voltage, a charge start voltage, a charge capacity, a discharge capacity, and a discharge capacity which enables maintaining a voltage of 1 V or above had values smaller than those in Example 1.

Further, the six types of thin-film solid secondary cells according to this example charged to 3.5 V were able to continuously drive a digital clock for about one month.
Furthermore, it was confirmed that each of the three types of thin-film solid secondary cells using LiCoO₂, LiMnCoO₄, and Li₂MnCoO₄ for the positive electrode in these thin-film solid secondary cells has the charge start voltage of 1.3 V or above, can be naturally charged, and can continuously repeat the cycle (natural charge and digital clock driving) for 100 times like Examples 1 to 3. Moreover, each of these three types of thin-film solid secondary cells which is not subjected to charge/discharge measurement has a voltage of 1.0 V or above even immediately after creation and can drive the digital clock like Examples 1 to 3.

(Example 8) Example 8 is the same as Example 7 except that Nb₂O₅ was used for a negative electrode active material layer 50 in place of Li₄Ti₅O₁₂.
A diffraction peak did not appear in the X-ray diffraction measurement, and it was confirmed that all the constituent layers in the 6 types of thin-film solid secondary cells are amorphous.

As a result of measuring charge/discharge characteristics, in each of all the thin-film solid secondary cells, a charge/discharge curve was substantially the same as that of the thin-film solid secondary cell according to Example 1 depicted in FIG. 2. In each of the three types of thin-film solid secondary cells using Li₂Mn₂O₄, LiMnCoO₄, and Li₂MnCoO₄ for the positive electrode, a charge capacity, a discharge capacity, and a discharge capacity which enables maintaining a voltage of 1 V or above had values larger than those in the example using LiMn₂O₄ for the positive electrode according to Example 4 (Nb₂O₅ is used for the negative electrode). In each of the three types of thin-film solid secondary cells containing Co for the positive electrode (LiCoO₂, LiMnCoO₄, and Li₂MnCoO₄ are used for the positive electrode), an increase in a discharge start voltage and a charge start voltage was observed.

In each of the two types of thin-film solid secondary cells using LiNiO₂ and LiTi₂O₄ for the positive electrode, a discharge start voltage, a charge start voltage, a charge capacity, a discharge capacity, and a discharge capacity which enables maintaining a voltage of 1 V or above had values smaller than those in the example where LiMn₂O₄ is used for the positive electrode (Nb₂O₅ is used for the negative electrode) according to Example 4.

Further, the six types of thin-film solid secondary cells according to this example charged to 3.5 V were able to continuously drive a digital clock for about one month.
Furthermore, it was confirmed that each of the three types of thin-film solid secondary cells using LiCoO₂, LiMnCoO₄, and Li₂MnCoO₄ for the positive electrode in the six types of thin-film solid secondary cells has the charge start voltage of 1.2 V or above, can be naturally charged, and can continuously repeat the cycle (natural charge and digital clock driving) for 100 times like Examples 1 to 3. Moreover, each of these three types of thin-film solid secondary cells which is not subjected to charge/discharge measurement has a voltage of 1.0 V or above even immediately after creation and can drive the digital clock like Examples 1 to 3.

(Example 9) Example 9 is the same as Example 7 except that Si-Mn (Si:Mn=70:30 at%) was used for a negative electrode active material layer 50 in place of Li₄Ti₅O₁₂.
A diffraction peak did not appear in the X-ray diffraction measurement, and it was confirmed that all the constituent layers in the 6 types of thin-film solid secondary cells are amorphous.

As a result of measuring charge/discharge characteristics, in each of all the thin-film solid secondary cells, a charge/discharge curve was substantially the same as that of the thin-film solid secondary cell according to Example 2 depicted in FIG. 3. In each of the four types of thin-film solid secondary cells using LiCoO₂, Li₂Mn₂O₄, LiMnCoO₄, and Li₂MnCoO₄ for the positive electrode, a discharge start voltage and a charge start voltage were substantially the same, but a charge capacity, a discharge capacity, and a discharge capacity which enables maintaining a voltage of 1 V or above had large values as compared with the example where LiMn₂O₄ is used for the positive electrode according to Example 2 (Si-Mn is used for the negative electrode). In each of the two types of thin-film solid secondary cells using LiNiO₂ and LiTi₂O₄ for the positive electrode, a discharge start voltage, a charge start voltage, a charge capacity, a discharge capacity, and a discharge capacity which enables maintaining a voltage of 1 V or above had values smaller than those in Example 2.

Further, the six types of thin-film solid secondary cells according to this example charged to 3.5 V were able to continuously drive a digital clock for about one month.
Furthermore, it was confirmed that each of the five types of thin-film solid secondary cells using LiCoO₂, LiNiO₂, Li₂Mn₂O₄, LiMnCoO₄, and Li₂MnCoO₄ for the positive electrode in these thin-film solid secondary cells has the charge start voltage of 2.1 V or above, can be naturally charged, and can continuously repeat the cycle (natural charge and digital clock driving) for 100 times like Examples 1 to 3. Moreover, each of these five types of thin-film solid secondary cells which is not subjected to charge/discharge measurement has a voltage of 1.5 V or above even immediately after creation and can drive the digital clock like Examples 1 to 3.

(Example 10) Example 10 is the same as Example 7 except that NiO was used for a negative electrode active material layer 50 in place of Li₄Ti₅O₁₂.
A diffraction peak did not appear in the X-ray diffraction measurement, and it was confirmed that all the constituent layers in the 6 types of thin-film solid secondary cells are amorphous.

As a result of measuring charge/discharge characteristics, in each of all the thin-film solid secondary cells, a charge/discharge curve was substantially the same as that of the thin-film solid secondary cell according to Example 1 depicted in FIG. 2. In each of the four types of thin-film solid secondary cells using LiCoO₂, Li₂Mn₂O₄, LiMnCoO₄, and Li₂MnCoO₄ for the positive electrode, a charge capacity, a discharge capacity, and a discharge capacity which enables maintaining a voltage of 1 V or above had values larger than those in the example using LiMn₂O₄ for the positive electrode according to Example 4 (NiO is used for the negative electrode). In each of the three types of thin-film solid secondary cells containing Co for the positive electrode (LiCoO₂, LiMnCoO₄, and Li₂MnCoO₄ are used for the positive electrode), an increase in a discharge start voltage and a charge start voltage was observed.

In each of the two types of thin-film solid secondary cells using LiNiO₂ and LiTi₂O₄ for the positive electrode, a discharge start voltage, a charge start voltage, a charge capacity, a discharge capacity, and a discharge capacity which enables maintaining a voltage of 1 V or above had values smaller than those in the example where LiMn₂O₄ is used for the positive electrode (NiO is used for the negative electrode) according to Example 4.

Further, the six types of thin-film solid secondary cells according to this example charged to 3.5 V were able to continuously drive a digital clock for about one month.
Furthermore, it was confirmed that each of the three types of thin-film solid secondary cells using LiCoO₂, LiMnCoO₄, and Li₂MnCoO₄ for the positive electrode in these thin-film solid secondary cells has the charge start voltage of 1.1 V or above, can be naturally charged, and can continuously repeat the cycle (natural charge and digital clock driving) for 100 times like Examples 1 to 3. Moreover, each of these six types of thin-film solid secondary cells which is not subjected to charge/discharge measurement has a voltage of 1.0 V or above even immediately after creation and can drive the digital clock like Examples 1 to 3.

(Comparative Example 1) In Comparative Example 1, a thin-film solid secondary cell having the structure depicted in FIG. 1 was created by a sputtering method. Layers other than a negative electrode active material layer 50 were formed with the same materials, the same film thicknesses, and the same film forming conditions as those in Example 1. The negative electrode active material layer 50 was formed by an RF magnetron sputtering method using a vanadium oxide (V₂O₅) sintered target as a negative electrode active material. An RF power was 1 KW, and the film was formed without heating. As a result, a V₂O₅ thin film of 0.3 µm was formed.
A diffraction peak did not appear in the X-ray diffraction measurement, and it was confirmed that all the constituent layers in the thin-film solid secondary cell are amorphous.

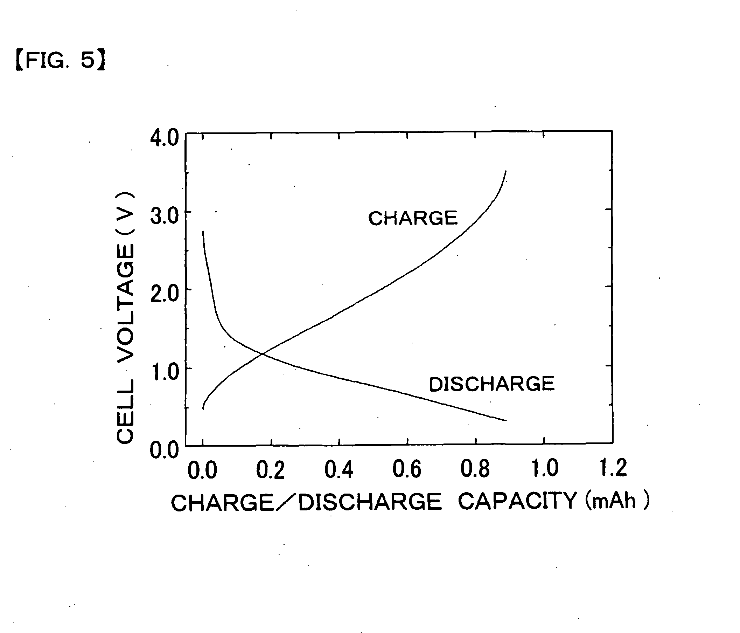

In the measurement of the charge/discharge characteristics, it was confirmed that the thin-film solid secondary cell repeatedly demonstrates a charge/discharge operation. FIG. 5 shows a graph of charge/discharge characteristics in a 10th cycle stably demonstrating the charge/discharge operation. A discharge start voltage and a charge start voltage in the 10th cycle in which the charge/discharge operation is stable were respectively 2.7 V and 0.5 V, and a charge capacity and a discharge capacity were respectively 0.89 mAh and 0.89 mAh. Additionally, a discharge capacity which enables maintaining a voltage of 1 V or above required to drive a regular device was approximately 0.28 mAh.

Comparing the charge/discharge characteristics of the thin-film solid secondary cells according to Examples 1 to 3 and Comparative Example 1 in FIGS. 2 to 5, it can be understood that a voltage at the time of discharge is rapidly reduced in Comparative Example 1 as compared with Examples 1 to 3. Further, it can be revealed from Table 1 that there is no large difference in charge and discharge capacities between Comparative Example 1 and Examples 1 to 3 but a discharge capacity which enables maintaining a voltage of 1 V or above in Comparative Example 1 is 1/3 or below of those in Examples 1 to 3.
Furthermore, when the thin-film solid secondary cell according to the comparative example charged to 2.5 V was used to drive a digital clock, the digital clock was continuously driven for about 10 days. This period is 1/3 or below of a period of one month or more where continuous driving is possible in Examples 1 to 3, and it substantially corresponds to a period where a voltage of 1 V or above can be maintained.

Moreover, in the comparative example, since a charge start voltage was approximately 0.5 V and the voltage was increased to 0.5 V only after discharge, the digital clock was not able to be driven without being charged after discharge. Additionally, a voltage immediately after creation was approximately 0.5 V, and hence the digital clock was not able to be driven as it is.

(Comparative Example 2) In Comparative Example 2, a thin-film solid secondary cell having the structure depicted in FIG. 1 was created by a sputtering method. Layers other than a positive electrode active material layer 30 were formed with the same materials, the same film thicknesses, and the same film forming conditions as those in Example 1. Although the same lithium manganate (LiMn₂O₄) as that in Example 1 was used for the positive electrode active material layer 30 in this example, the film was formed at a substrate temperature of 300°C.
A diffraction peak appeared in the X-ray diffraction measurement. This diffraction peak can be identified from an LiMn₂O₄ spinel structure, and it was confirmed that the positive electrode active material layer 30 formed of LiMn₂O₄ is crystallized.

In the measurement of the charge/discharge characteristics, although it was confirmed that substantially the same charge/discharge characteristics as those in Example 1 were demonstrated in the first five cycles, but film exfoliation occurred in the subsequent cycles and the measurement was impossible.

(Comparative Example 3) In Comparative Example 3, a thin-film solid secondary cell having the structure depicted in FIG. 1 was created by a sputtering method. Layers other than a solid electrolyte layer 20 were formed with the same materials, the same film thicknesses, and the same film forming conditions as those in Example 1. Although the same lithium phosphate (Li₃PO₄) as that in Example 1 was used for the solid electrolyte layer 20, the film was formed at a substrate temperature of 300°C.
A diffraction peak appeared in the X-ray diffraction measurement. This diffraction peak can be identified from a crystal structure of Li₃PO₄, and it was confirmed that the solid electrolyte layer 20 formed of Li₃PO₄ is crystallized.

In the measurement of the charge/discharge characteristics, although it was confirmed that substantially the same charge/discharge characteristics as those in Example 1 were demonstrated in the first three cycles, but film exfoliation occurred in the subsequent cycles and the measurement was impossible.

In Comparative Example 1, a vanadium oxide V₂O₅ is used as the negative electrode active material layer 50. On the other hand, in Examples 1 to 10, a lithium-titanium oxide Li₄Ti₅O₁₂, an Si-Mn alloy, and the like other than the vanadium oxide V₂O₅ are used.
As shown in Table 1 and FIGS. 2 to 5, in Comparative Example 1, a voltage is rapidly decreased at the time of discharge, and a capacity which enables maintaining a voltage of 1 V or above with which a device can be driven is just 0.28 mAh. On the other hand, in Examples 1 to 4 and Examples 6 to 10, a capacity which enables maintaining a voltage of 1 V or above is approximately 0.9 mAh or above, which is approximately three times that in Comparative Example 1. Additionally, in Example 5 having a relatively small capacity, a capacity which enables maintaining a voltage of 1 V or above is 0.55 mAh or above, which is approximately two or more times that in Comparative Example 1. Further, when each thin-film solid secondary cell was charged to 2.5 V and then a digital clock which can be driven with a voltage of 1 V or above was driven, the thin-film solid secondary cell according to Comparative Example 1 was able to continuously drive the digital clock for about 10 days alone, whereas the thin-film solid secondary cell according to Example 5 continuously drove the digital clock for about 20 days which is approximately double the value in Comparative Example 1, and the thin-film solid secondary cells according to Examples 1 to 4 and Examples 6 to 10 continuously drove the digital clock for about 30 days which is three times the value in Comparative Example 1.

As explained above, since the lithium-titanium oxide, the Si-Mn alloy, or the like is used for the negative electrode active material layer according to the examples, a speed of a reduction in voltage at the time of discharge becomes moderate and the capacity which enables maintaining a voltage of 1 V or above required to practically drive a device can be increased as compared with the thin-film solid secondary cell in which the vanadium oxide V₂O₅ is used for the negative electrode active material like the comparative examples.
Furthermore, the thin-film solid secondary cells according to the examples can be created without using the vanadium oxide which has a difficulty in processing because of its poisonous properties and weakness in moisture.

Moreover, in nearly half of the thin-film solid secondary cells according to Examples 1 to 10, as explained above, after discharge, a voltage is naturally increased to 1 V or above after a while. As a result, in each thin-film solid secondary cell in which a voltage is naturally increased to 1 V or above after discharge, a regular digital clock which is driven with a voltage of 1 V or above can be continuously driven by just leaving the cell for a while after discharge without charging the cell from the outside.

On the other hand, in the thin-film solid secondary cell according to Comparative Example 1, a voltage is increased to just 0.5 V after discharge, and it was not able to drive the digital clock without being charged from the outside.
As explained above, in Comparative Example 1, the cell was not naturally charged to a voltage which enables driving a liquid crystal clock.
It can be considered that the thin-film solid secondary cells enable a voltage to be naturally increased to 1 V or above after discharge so that each cell can be charged according to Examples 1 to 10 because a potential difference between the positive electrode active material layer and the negative electrode active material layer is large and each secondary cell is of a full solid thin-film type. That is, when an electrolyte is of a solution type, even if a potential difference between the positive electrode active material layer and the negative electrode active material layer is large, a reaction is produced on an electrode surface when discharge is performed to nearly 0 V, and the cell cannot function. It can be considered that there is no example of reports of solution type secondary cells which can be naturally charged without being charged from the outside because its cell function is lost when discharge is carried out to nearly 0 V.

However, since each secondary cell according to the examples is of a full-solid thin-film type, its inside is not transformed even though discharge is carried out to nearly 0 V, and hence its cell function is not degraded. As a result, in each thin-film solid secondary cell according to the examples, charge and discharge can be repeatedly performed to nearly 0 V. Additionally, since the thin-film solid secondary cell according to the examples is created by using a combination of materials having a large potential difference between the positive electrode active material layer and the negative electrode active material layer, it can be considered that such a cell can be naturally charged to 1 V or above without being charged from the outside because a force of returning to an equilibrium state acts on each layer.

As explained above, in the thin-film solid secondary cell in which a voltage is naturally increased to 1 V or above after discharge in the examples, a material forming each layer is selected in such a manner that a potential difference between the positive electrode active material layer and the negative electrode active material layer becomes large, and a voltage is naturally increased to an equilibrium state to charge the cell after discharge to nearly 0 V without charging the cell from the outside. Furthermore, a practical digital clock which can be driven with a voltage of 1 V or above can be repeatedly driven without being charged from the outside.

Moreover, in the thin-film solid secondary cell according to Comparative Examples 2 and 3, the positive electrode active material layer or the solid electrolyte layer is crystallized, a large stress is produced when a lithium ion moves during charge/discharge, resulting in film exfoliation.
On the other hand, in each of the thin-film solid secondary cells according to Examples 1 to 10, since at least the layers other than the collector layers are amorphous films, a stress produced during charge/discharge can be suppressed, film exfoliation does not occur even if charge/discharge is repeated, and stable cell characteristics are demonstrated.
As explained above, in each thin-film solid secondary cell according to the examples, since at least the layers other than the collector layers are amorphous, a stress can be reduced, and film exfoliation hardly occurs.

(Example 11) In Example 11, a silicon nitride thin film (SiN) as an anti-moisture film 60 was formed on a surface exposed to atmospheric air by a sputtering method in each of the thin-film solid secondary cells according to Examples 1 to 10 and Comparative Example 1. That is, the silicon nitride thin film was formed on an exposed surface of a collector layer 20 on a negative electrode side.
The anti-moisture film 60 was formed by an RF magnetron sputtering method using an Si semiconductor target and introducing a nitrogen gas. The film was formed with an RF power of 1 KW without heating. As a result, the silicon nitride thin film of 0.4 µm was formed.

When charge/discharge characteristics of a thin-film solid secondary cell covered with the thus obtained anti-moisture film 60 were measured immediately after production, charge and discharge voltages and charge and discharge capacities which are respectively equivalent to those in each of the thin-film solid secondary cells according to Examples 1 to 10 and Comparative Example 1 which are not covered with the anti-moisture film 60 were obtained.

The thin-film solid secondary cells according to Examples 1 to 10 and Comparative Example 1 were left in a room as they are, and charge/discharge characteristics of these cells were again measured after about one month.
As a result, in each of the thin-film solid secondary cells according to Examples 1 to 10 which are not covered with the anti-moisture film 60, the discharge capacity was reduced approximately 5% except Example 6. In Example 6, the discharge capacity was reduced approximately 10%. Moreover, in the thin-film solid secondary cell according to Comparative Example 1 which is not covered with the anti-moisture film 60, the discharge capacity was reduced approximately 20%. These reductions in discharge capacity occur because cell characteristics are degraded when each thin-film solid secondary cell absorbs moisture in atmospheric air. The metal, the alloy, and the oxide used for the negative electrode in Example 6 and Comparative Example 1 are materials which are apt to absorb moisture. In particular, in the thin-film solid secondary cell according to Comparative Example 1 in which the vanadium oxide V₂O₅ is used for the negative electrode active material layer, it was revealed that the cell has weakness in resistance against moisture.

On the other hand, in each of the thin-film solid secondary cells according to Examples 1 to 10 and Comparative Example 1 which are covered with the anti-moisture film 60, a reduction in charge/discharge capacities was not observed in the measurement after one month.
As explained above, it can be understood that the thin-film solid secondary cell has durability against moisture in air and its cell characteristics are hardly degraded when the surface is covered with the anti-moisture film 60.

## Claims

1. A thin-film solid secondary cell obtained by laminating a positive electrode collector layer, a positive electrode active material layer, a solid electrolyte layer, a negative electrode active material layer, and a negative electrode collector layer on a substrate,
wherein the positive electrode active material layer is a thin film formed of a metal oxide containing a transition metal and lithium,
the negative active material layer is a thin film formed of one of a semiconductor, a metal, an alloy, and a metal oxide other than a vanadium oxide, and
the positive electrode active material layer, the solid electrolyte layer, and the negative electrode active material layer are amorphous thin films.

2. The thin-film solid secondary cell according to claim 1, wherein a material forming the solid electrolyte layer is a lithium phosphate (Li₃PO₄) or a lithium phosphate having nitrogen added therein (LIPON).

3. The thin-film solid secondary cell according to claim 1, wherein a material forming the positive electrode active material layer is one of a lithium-manganese oxide, a lithium-cobalt oxide, a lithium-nickel oxide, a lithium-manganese-cobalt oxide, and a lithium-titanium oxide.

4. The thin-film solid secondary cell according to claim 1, wherein a material forming the negative electrode active material layer is one of a lithium-titanium oxide (Li-Ti-O), a niobium pentoxide (Nb₂O₅), a silicon-manganese alloy (Si-Mn), a silicon-cobalt alloy (Si-Co), a silicon-nickel alloy (Si-Ni), a nickel oxide (NiO), a nickel oxide having lithium added therein (NiO-Li), an indium oxide (In₂O₃), an indium oxide having tin added therein (ITO), a tin oxide (SnO₂), a tin oxide having antimony added therein (ATO), a tin oxide having fluorine added therein (FTO), a zinc oxide (ZnO), a zinc oxide having aluminum added therein (AZO), a zinc oxide having gallium added therein (GZO), a titanium oxide (TiO₂), a silicon semiconductor (Si), a germanium semiconductor (Ge), a lithium metal (Li), a magnesium metal (Mg), a magnesium-lithium alloy (Mg-Li), an aluminum metal (Al), and an aluminum-lithium alloy (A1-Li).

5. The thin-film solid secondary cell according to claim 1, wherein a difference in electrode potential between the negative electrode active material layer and the positive electrode active material layer is 1 V or above.

6. The thin-film solid secondary cell according to any one of claims 1 to 5, wherein an anti-moisture film is laminated on a surface.

7. The thin-film solid secondary cell according to claim 1, wherein the positive electrode collector layer, the positive electrode active material layer, the solid electrolyte layer, the negative electrode active material layer, and the negative electrode collector layer are formed by a sputtering method.

## Patentansprüche

1. Dünnschicht-Festkörper-Sekundärzelle, erhalten durch Laminieren einer Kollektorschicht einer positiven Elektrode, einer Aktivmaterialschicht für eine positive Elektrode, einer Festelektrolytschicht, einer Aktivmaterialschicht für eine negative Elektrode, und eine Kollektorschicht einer negativen Elektrode auf einem Substrat,
wobei die Aktivmaterialschicht für die positive Elektrode eine dünne Schicht ist, gebildet aus einem Metalloxid enthaltend ein Übergangsmetall und Lithium,
die Aktivmaterialschicht für die negative Elektrode eine dünne Schicht ist, gebildet aus einem gewählt aus einem Halbleiter, einem Metall, einer Legierung und einem Metalloxid, welches nicht Vanadiumoxid ist, und
wobei die Aktivmaterialschicht der positiven Elektrode, die Festelektrolytschicht und die Aktivmaterialschicht der negativen Elektrode amorphe dünne Schichten sind.

2. Dünnschicht-Festkörper-Sekundärzelle gemäß Anspruch 1, wobei ein Material, welches die Festelektrolytschicht bildet, ein Lithiumphosphat (Li₃PO₄) oder ein Lithiumphosphat mit zugegebenem Stickstoff (LIPON) ist.

3. Dünnschicht-Festkörper-Sekundärzelle nach Anspruch 1, wobei ein Material, welches die aktive Materialschicht der positiven Elektrode bildet, eines aus einem Lithium-Magnesiumoxid, einem Lithium-Kobaltoxid, einem Lithium-Nickeloxid, einem Lithium-Mangan-Kobaltoxid und einem Lithium-Titanoxid ist.

4. Dünnschicht-Festkörper-Sekundärzelle nach Anspruch 1, wobei ein Material, welches die aktive Materialschicht der negativen Elektrode bildet, eines ist, aus einem Lithiumtitanoxid (Li-Ti-O), einem Niobpentoxid (Nb₂O₅), einer Silizium-Mangan-Legierung (Si-Mn), einer Silizium-Kobalt-Legierung (Si-Co), einer Silizium-Nickel-Legierung (Si-Ni), einem Nickeloxid) (NiO), einem Nickeloxid mit zugegebenem Lithium (NiO-Li), einem Indiumoxid (In₂O₃), einem Indiumoxid mit zugegebenem Zinn (ITO), einem Zinnoxid (SnO₂), einem Zinnoxid mit zugegebenem Antimon (ATO), einem Zinnoxid mit zugegebenem Fluor (FTO), einem Zinkoxid (ZnO), einem Zinkoxid mit zugegebenem Aluminium (AZO), einem Zinkoxid mit zugegebenem Gallium (GZO), einem Titanoxid (TiO₂), einem Siliziumhalbleiter (Si), einem Germaniumhalbleiter (Ge), einem Lithiummetall (Li), einem Magnesiummetall (Mg), einer Magnesium-Lithium-Legierung (Mg-Li), einem Aluminiummetall (Al), und einer Aluminium-Lithium-Legierung (Al-Li).

5. Dünnschicht-Festkörper-Sekundärzelle gemäß Anspruch 1, wobei ein Unterschied des Elektrodenpotentials zwischen der aktiven Materialschicht der negativen Elektrode und der aktiven Materialschicht der positiven Elektrode 1 V oder darüber beträgt.

6. Dünnschicht-Festkörper-Sekundärzelle nach einem der Ansprüche 1 bis 5, wobei ein Antifeuchtigkeitsfilm auf eine Oberfläche laminiert ist.

7. Dünnschicht-Festkörper-Sekundärzelle nach Anspruch 1, wobei die Kollektorschicht der positiven Elektrode, die aktive Materialschicht der positiven Elektrode, die Festelektrolytschicht, die aktive Materialschicht der negativen Elektrode und die Kollektorschicht der negaticen Elektrodedurch ein Sputterverfahren gebildet sind.

## Revendications

1. Pile rechargeable solide à couches minces obtenue par stratification d'une couche de collecteur d'électrode positive, d'une couche de matériau actif d'électrode positive, d'une couche d'électrolyte solide, d'une couche de matériau actif d'électrode négative, et d'une couche de collecteur d'électrode négative sur un substrat,
dans laquelle la couche de matériau actif d'électrode positive est une couche mince formée d'un oxyde métallique contenant un métal de transition et du lithium,
la couche de matériau actif d'électrode négative est une couche mince formée de l'un parmi un semi-conducteur, un métal, un alliage, et un oxyde métallique autre qu'un oxyde de vanadium, et
la couche de matériau actif d'électrode positive, la couche d'électrolyte solide, et la couche de matériau actif d'électrode négative sont des couches minces amorphes.

2. Pile rechargeable solide à couches minces selon la revendication 1, dans laquelle un matériau formant la couche d'électrolyte solide est un phosphate de lithium (Li₃PO₄) ou un phosphate de lithium additionné d'azote (LIPON).

3. Pile rechargeable solide à couches minces selon la revendication 1, dans laquelle un matériau formant la couche de matériau actif d'électrode positive est l'un parmi un oxyde de lithium-manganèse, un oxyde de lithium-cobalt, un oxyde de lithium-nickel, un oxyde de lithium-manganèse-cobalt, et un oxyde de lithium-titane.

4. Pile rechargeable solide à couches minces selon la revendication 1, dans laquelle un matériau formant la couche de matériau actif d'électrode négative est l'un parmi un oxyde de lithium-titane (Li-Ti-O), un pentoxyde de niobium (Nb₂O₅) , un alliage de silicium-manganèse (Si-Mn), un alliage de silicium-cobalt (Si-Co), un alliage de silicium-nickel (Si-Ni), un oxyde de nickel (NiO), un oxyde de nickel additionné de lithium (NiO-Li), un oxyde d'indium (In₂O₃), un oxyde d'indium additionné d'étain (ITO), un oxyde d'étain (SnO₂), un oxyde d'étain additionné d'antimoine (ATO), un oxyde d'étain additionné de fluor (FTO), un oxyde de zinc (ZnO), un oxyde de zinc additionné d'aluminium (AZO), un oxyde de zinc additionné de gallium (GZO), un oxyde de titane (TiO₂), un semi-conducteur au silicium (Si), un semi-conducteur au germanium (Ge), le lithium métallique (Li), le magnésium métallique (Mg), un alliage de magnésium-lithium (Mg-Li), l'aluminium métallique (Al), et un alliage d'aluminium-lithium (Al-Li).

5. Pile rechargeable solide à couches minces selon la revendication 1, dans laquelle la différence de potentiel d'électrode entre la couche de matériau actif d'électrode négative et la couche de matériau actif d'électrode positive est de 1 V ou plus.

6. Pile rechargeable solide à couches minces selon l'une quelconque des revendications 1 à 5, dans laquelle une couche anti-humidité est stratifiée sur une surface.

7. Pile rechargeable solide à couches minces selon la revendication 1, dans laquelle la couche de collecteur d'électrode positive, la couche de matériau actif d'électrode positive, la couche d'électrolyte solide, la couche de matériau actif d'électrode négative, et la couche de collecteur d'électrode négative sont formées par un procédé de pulvérisation cathodique.
